# DEMANDE DE BREVET EUROPEEN

(11) **EP 1 161 101 A1**
(43) Date de publication de la demande: **05.12.2001**
(21) Numéro de dépôt: 01401322.1
(22) Date de dépôt: 21.05.2001
(51) Int. Cl.: H04N 7/50

(54) **Codage vidéo de source avec prédiction du movement et filtrage des effets de blocs**

(30) Priorité: 29.05.2000 FR 0006841
(71) Demandeur: ALCATEL, 75008 Paris (FR)
(72) Inventeur: Assaf, Nadine, 92700 Colombes (FR)
(74) Mandataire: Fournier, Michel

(57) **Abrégé**

L'invention propose un codage vidéo de source qui est particulièrement adapté à une transmission sur un canal à faible débit et haut taux d'erreur, tel un canal de transmission sans fil. Elle propose d'utiliser un codage avec prédiction du mouvement par blocs, avec plusieurs images de référence. Les images de référence subissent un traitement de filtrage des effets de blocs. Lors du codage d'une image, on sélectionne une des images de référence.

L'invention permet grâce à l'utilisation de plusieurs images de référence de limiter les erreurs de propagation temporelles dans le canal de transmission. Comme les images de référence subissent un filtrage des effets de blocs, la correction des erreurs de transmission temporelles s'effectue indépendamment des erreurs intrinsèques provoquées par le codage par blocs.

## Description

La présente invention concerne le codage, et plus précisément le codage vidéo de source pour une transmission sans fil.

La transmission sans fil est caractérisée par un débit de transmission relativement faible, et par un taux d'erreur important. Pour le débit de transmission, on qualifie de faible débit des valeurs de débit inférieures à 100 kbit/s, comme par exemple les canaux GSM à 14 kbit/s. On qualifie d'important des taux d'erreur supérieurs à 10⁻⁶, voire supérieurs à 10⁻⁴.

La norme ITU-T H 263+ propose des solutions pour le codage de source vidéo. Cette norme est constituée d'une partie commune obligatoire et d'un ensemble d'annexes facultatives, qui peuvent être implémentées en sus de la partie commune de la norme. La norme ne fournit pas d'indication de la qualité des images obtenues, ni de la combinaison d'annexes à appliquer dans des circonstances données, notamment pour des transmissions sans fil. L'implémentation de l'ensemble de ces annexes conduit à un système difficilement applicable à des transmissions sans fil, du fait du faible débit de transmission disponible et du taux d'erreurs.

La partie commune de la norme H.263+ propose de procéder à un codage par blocs, avec prédiction. On distingue dans une séquence d'images des images envoyées intégralement - images de type "I" -, des images qui ne sont pas transmises intégralement mais prédites à partir d'une image précédente - images de type "P" - et des images qui ne sont pas transmises intégralement mais prédites à partir d'une image précédente et d'une image suivante. Le codage utilise les étapes suivantes, pour une image dans laquelle sont définis des blocs ou des macro-blocs composés d'une pluralité de blocs, typiquement de 6 blocs dont 4 blocs de luminance et 2 blocs de chrominance :
- estimation du mouvement des blocs ou des macro-blocs de chaque image;
- prédiction de la compensation du mouvement, par rapport à une image de référence;
- codage pour la transmission, typiquement par codage avec compression (comprenant la DCT ("Discrete Cosine Transform" transformée de cosinus numérique), la quantification, et le codage VLC ("Variable Length Coding", codage à longueur variable)).

Le décodage utilise des étapes inverses pour reconstituer chaque image.

Dans cette norme, l'annexe J propose une solution au problème des effets de blocs. Dans un codage par bloc, le fait de traiter les éléments d'image par blocs peut conduite à des variations brutales des valeurs des pixels au passage d'un bloc à l'autre. Apparaissent alors sur l'image transmise des carreaux, qui correspondent à des blocs. Pour limiter les effets de blocs, l'annexe J propose d'utiliser un filtre de bord de bloc dans la boucle de codage. Le filtrage est appliqué sur des bords de blocs formés de 8 x 8 pixels. Des pixels du bord de chaque bloc sont filtrés; pour les pixels d'un bord vertical, l'annexe J propose un exemple de filtrage sur quatre pixels horizontaux adjacents, et pour les pixels d'un bord horizontal un exemple de filtrage sur quatre pixels verticaux adjacents. La fonction de filtrage présente une forme de triangle.

L'appréciation de l'effet obtenu par l'annexe J - la disparition des effets de bords des blocs - est essentiellement qualitative. On recherche la disparition des effets de bloc pour l'oeil humain. Ceci correspond quantitativement à une limitation des composantes à haute fréquence de l'image, ou à une limitation de la différence entre les valeurs de pixels adjacents.

L'annexe N de la norme propose d'utiliser pour la prédiction des images plusieurs images de référence, ou images mémoire. Dans le codeur, l'annexe N propose de sélectionner une image mémoire parmi les images possibles, de sorte à optimiser la qualité du codage. Le choix de l'image mémoire à utiliser pour le codage de prédiction est transmis au décodeur, qui utilise l'image mémoire appropriée en fonction des instructions reçues depuis le codeur. La solution proposée dans cette annexe permet de s'affranchir de l'erreur temporelle de propagation.

L'invention propose une solution au problème de la qualité vidéo pour des systèmes de transmission sans fil. Elle propose notamment une solution au problème des artefacts de blocs ou d'effets de blocs, qui résultent d'un codage par bloc. Elle permet une amélioration de la qualité d'image; indépendamment de cette amélioration de la qualité d'image, l'invention permet de limiter les problèmes liés à la transmission

Plus précisément, l'invention propose un procédé de codage d'images par blocs avec prédiction du mouvement, caractérisé par l'utilisation de plusieurs images de référence, les images de référence ayant subi un traitement de filtrage des effets de blocs, et par la sélection d'une image de référence parmi les dites images de référence lors du codage d'une image.

Elle propose aussi un système de codage d'images avec prédiction du mouvement par blocs, comprenant un estimateur de mouvement recevant une image à coder et fournissant des vecteurs de mouvement, un prédicteur de compensation du mouvement recevant les vecteurs de mouvement et une image de référence et fournissant une image estimée, une mémoire d'images de référence stockant au moins deux images de référence et fournissant une des dites images de référence au dit prédicteur, et un dispositif de filtrage des effets de blocs filtrant les effets de blocs des images de référence avant leur stockage dans la mémoire d'images de référence.

L'invention propose encore un procédé de décodage avec prédiction du mouvement par blocs, caractérisé par la reconstitution d'une image transmise à partir d'une image de référence sélectionnée parmi plusieurs images de référence reçues, les images de référence ayant subi un traitement de filtrage des effets de blocs.

Dans un mode de réalisation, le procédé comprend l'application d'un traitement de filtrage des effets de blocs aux images reconstituées.

L'invention propose encore un système de décodage par prédiction du mouvement par blocs, comprenant un décodeur fournissant des vecteurs de mouvement et une différence entre l'image à reconstituer et une image estimée, un prédicteur de compensation du mouvement recevant les vecteurs de mouvement et une image de référence et fournissant une image estimée, une mémoire d'images de référence stockant au moins deux images de référence et fournissant une des dites images de référence au dit prédicteur, et un dispositif de filtrage des effets de blocs filtrant les effets de blocs des images de référence avant leur stockage dans la mémoire d'images de référence.

Dans un mode de réalisation, le système présente un additionneur recevant d'une part ladite différence et d'autre part ladite image estimée, et fournissant une image reconstituée au dit dispositif de filtrage des effets de blocs.

L'invention concerne encore un procédé de transmission par un codage avec prédiction du mouvement par blocs, caractérisé par :
- au codage, l'utilisation de plusieurs images de référence, les images de référence ayant subi un traitement de filtrage des effets de blocs, avec une sélection d'une image de référence parmi les dites images de référence lors du codage d'une image à transmettre;
- au décodage, la reconstitution de l'image transmise à partir d'une image de référence sélectionnée parmi plusieurs images de référence reçues, les images de référence ayant subi un traitement de filtrage des effets de blocs.

Dans un mode de réalisation, la transmission est une transmission à bas débit et haut taux d'erreur.

Dans un autre mode de réalisation, le procédé comprend l'application d'un traitement de filtrage des effets de blocs aux images reconstituées.

L'invention concerne enfin un dispositif de transmission par un codage avec prédiction du mouvement par blocs, comprenant un tel système de codage et un tel système de décodage.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation schématique d'un système de codage à prédiction selon l'invention;
- figure 2 une représentation schématique d'un système de décodage selon l'invention.

L'invention propose dans un système de codage par blocs avec prédiction, du type de celui proposé dans la norme H.263+, d'utiliser d'une part un filtrage de bord des blocs, et d'autre part une pluralité de trames mémoire. On combine ainsi dans un système du genre de celui de la partie obligatoire de la norme H.263+ des solutions du type de celles proposées dans les annexes J et N. L'invention est particulièrement avantageuse en ce que le filtrage des effets de blocs a lieu avant le stockage des images reconstituées dans la mémoire d'image. De ce fait, les effets de blocs induits par le codage sont neutralisés, tandis que l'utilisation d'une pluralité d'images mémoire permet de limiter les erreurs temporelles de propagation.

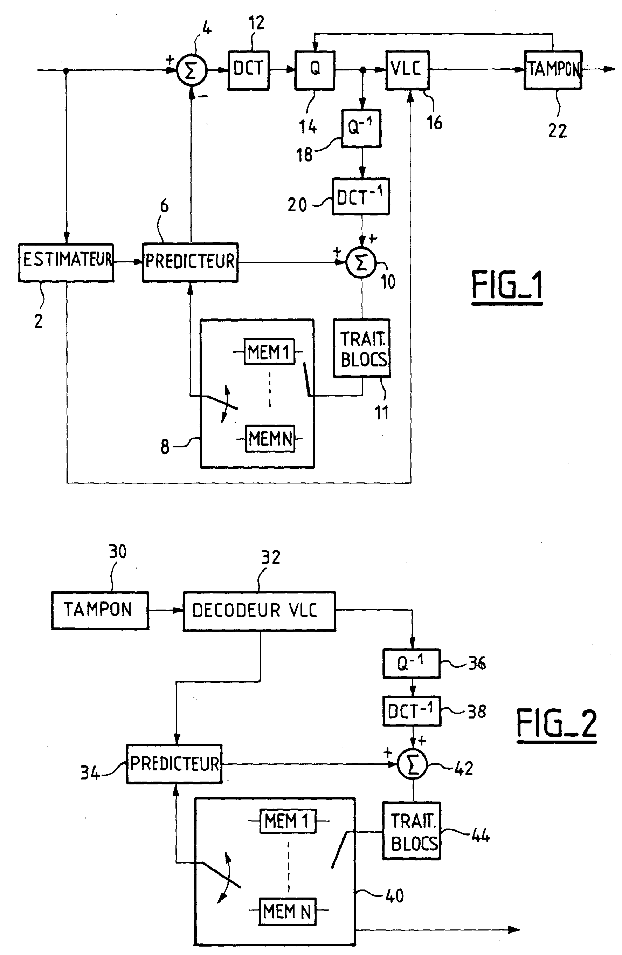

La figure 1 est une représentation schématique d'un système de codage à prédiction selon l'invention, qui utilise plusieurs images mémoire de référence. Les images vidéo sont appliquées en entrée du système de codage d'une part à un estimateur de mouvement 2 et d'autre part à une entrée d'un soustracteur 4.L'estimateur de mouvement fournit une estimation du mouvement des blocs de l'image par rapport à l'image précédente, ou des macro-blocs de cette image; comme proposé dans la norme, on peut utiliser des blocs de 8 x 8 pixels, et des macro-blocs composés de 6 blocs dont 4 blocs de luminance et 2 blocs de chrominance. Les vecteurs de mouvement des blocs sont transmis à un prédicteur de compensation du mouvement 6. Celui-ci reçoit aussi en entrée une image de base pour l'estimation, qui provient d'une mémoire d'images de référence 8. Comme proposé dans l'annexe N de la norme, cette mémoire d'images de référence comprend une pluralité d'images de référence, et la prédiction de compensation du mouvement s'effectue par rapport à l'une de ces images de référence. Plus spécifiquement, la mémoire d'images de référence comprend une pluralité d'images stockées et un commutateur permettant de fournir au prédicteur de compensation de dispersion une des images. Le commutateur peut être commandé en fonction de différents critères, tels que la qualité de l'image reconstituée, ou encore la quantité d'information à transmettre, le principe du choix étant connu en soi. De même, de façon connue en soi, l'image de référence utilisée est transmise depuis le système de codage vers le système de décodage. La mise à jour des images de référence dans le système de décodage s'effectue aussi sur commande du système de codage.

Selon l'invention, les images de référence stockées dans la mémoire d'images de référence subissent avant d'être stockées un traitement de limitation des effets de blocs, comme représenté en 11 sur la figure 1, et expliqué plus en détail dans la suite.

A partir de l'image de référence et des vecteurs de mouvement, le prédicteur de compensation du mouvement fournit une image estimée, qui est appliquée d'une part à une entrée de soustraction du soustracteur 4 et d'autre part à une entrée d'un additionneur 10.

De la sorte, le soustracteur 4 reçoit l'image vidéo d'entrée, et une image estimée à partir d'une image de référence contenue dans la mémoire d'images de base. La soustraction de l'image estimée à l'image vidéo appliquée en entrée est appliquée à un codeur avec compression 12, typiquement un codeur par transformation par cosinus numérique. On procède ensuite à une quantification en 14, de préférence avec un pas de quantification variable. La sortie du quantificateur 14 est appliquée d'une part à un codeur à longueur variable 16 et d'autre part à un inverseur de quantification 18, qui applique une opération inverse. En sortie de l'inverseur de quantification 18, on applique en 20 l'inverse de la transformation du codeur 12. En sortie de l'inverseur de codage 20, on retrouve la différence entre l'image d'entrée et l'image estimée, telle qu'elle pourrait être reconstituée après réception dans le système de décodage de la figure 2, en l'absence d'erreurs de transmission. Cette différence est appliquée à une entrée de l'additionneur 10. De la sorte l'additionneur 10 fournit en sortie vers la mémoire d'images de référence une image de référence une image qui peut être obtenue après réception dans le système de décodage - le cas échéant après perturbation par les erreurs de transmission.

Le codeur à longueur variable reçoit la sortie du codeur 14, et en outre la sortie de l'estimateur de mouvement 2, autrement dit la différence entre l'image d'entrée et l'image estimée et les vecteurs de mouvement. La sortie du codeur VLC est appliquée à un tampon vidéo 22 avant transmission sur le canal; bien entendu, avant la transmission, on peut multiplexer le signal vidéo avec des signaux audio ou autres, ce qui est connu en soi et sans incidence sur le fonctionnement de l'invention. Pour un pas de quantification variable, la quantité d'information dans le tampon permet de commander le pas de quantification, comme représenté sur la figure 1 par la flèche reliant le tampon 22 et le quantificateur 14.

Selon l'invention, dans le système de la figure 1, on applique un traitement de limitation des effets de bords aux images de référence qui sont stockées dans la mémoire d'images de référence. Dans le mode de réalisation de la figure, ce traitement est appliqué en 11, en sortie de l'additionneur 10, immédiatement avant le stockage des images de référence dans la mémoire d'images de référence. De la sorte, les images de référence utilisées pour le codage prédictif ne présentent pas (ou moins) d'erreurs provoquées par l'utilisation de blocs pour l'estimation du mouvement. En d'autres termes, la solution de l'annexe N de la norme - le choix parmi plusieurs images de référence - n'a plus qu'à pallier les erreurs de transmission sur le canal, et non plus les erreurs intrinsèques au codage.

La figure 2 montre une représentation schématique d'un système de décodage selon l'invention. Le système de décodage reçoit en entrée sur un tampon 30 les informations transmises sur le canal à bas débit. Les informations reçues sont transmises à un décodeur à longueur variable 32, qui est inverse du codeur à longueur variable du système de la figure 1. Ce décodeur VLC 32 fournit d'une part des vecteurs de mouvement qui sont appliqués à un prédicteur de compensation du mouvement 34, et d'autre part la différence entre l'image d'entrée et l'image estimée. Cette différence est appliquée à un inverseur de quantification 36, similaire à l'inverseur 18 de la figure 1, et à un inverseur 38 similaire à l'inverseur 20 de la figure 1.

Le prédicteur de mouvement reçoit une image de référence provenant d'une mémoire d'image de référence 40. Comme dans la mémoire de la figure 1, la mémoire d'images de référence contient plusieurs images de référence, et un commutateur permettant d'appliquer au prédicteur de compensation du mouvement 34 l'une des images de référence. Comme indiqué plus haut, le commutateur - la sélection d'une image de référence - peut s'effectuer en fonction d'informations reçues sur le canal de transmission depuis le système de codage de la figure 1. D'autres solutions sont possibles, par exemple à partir de l'application locale dans le système de décodage de règles de sélection similaires à celles qui sont appliquées dans le système de codage : il importe simplement que la sélection de l'image de référence dans le système de décodages soit identique à la sélection de l'image de référence dans le système de codage, de sorte à assurer une reconstruction correcte de l'image transmise. A partir des vecteurs de mouvement, et de l'image de référence, le prédicteur de compensation de mouvement fournit une image estimée, qui est appliquée à un additionneur 42.

L'additionneur 42 reçoit d'une part une image estimée fournie par le prédicteur de compensation de mouvement, et d'autre part la différence entre l'image estimée et l'image de référence fournie par l'inverseur 38. Il fournit en sortie une image reconstruite.

Cette image peut alors être affichée. Cette image peut encore être stockée pour servir ensuite d'image de référence. Dans ce cas, elle est transmise à un dispositif 44 de traitement des limitations des effets de bloc. Celui-ci est similaire au dispositif 11 de la figure 1. De la sorte, on retrouve dans la mémoire d'images de référence 40 des images de référence identiques - aux erreurs de transmission près - à celles qui sont contenues dans la mémoire d'images de référence 8 du système de la figure 1.

Dans le mode de réalisation de la figure 2, les images affichées sont obtenues en sortie de la mémoire d'images de référence. Ceci assure que les images affichées ont subi en 44 un traitement de limitation des effets de bords. On notera toutefois qu'il n'est pas indispensable pour le fonctionnement de l'invention que les images affichées subissent ce traitement, dans la mesure où les images de référence le subissent. Il est avantageux que les images affichées subissent aussi le traitement de limitation des effets de bord : de fait, les moyens nécessaires sont présents dans le système de la figure 2, et l'application du traitement ne peut qu'améliorer la qualité des images affichées.

Dans la description qui précède, on n'a mentionné que de façon incidente la façon dont les images de référence pouvaient être sélectionnées, tant dans le système de codage que dans le système de décodage. On peut à cet effet utiliser les solutions connues en soi.

De la même façon, on n'a mentionné que de façon incidente la nature du traitement de limitation des effets de bords. Ce traitement peut être du type proposé dans l'annexe J de la norme H.263+. Il est plus généralement possible d'utiliser d'autres solutions, en faisant varier le nombre de pixels sur lequel s'effectue le filtrage, en n'appliquant qu'un filtrage horizontal, en n'appliquant qu'un filtrage vertical, ou en utilisant une autre fonction de filtrage que celle qui est proposée dans l'annexe J. De façon générale, comme indiqué plus haut, les résultats du filtrage sont appréciés qualitativement, par le défaut de perception des effets de bloc pour un utilisateur.

L'invention permet d'améliorer la qualité du codage vidéo et s'applique notamment pour une transmission à bas débit et à haut taux d'erreur; elle n'implique pas de modification drastique de la structure du codeur : il suffit par rapport au codeur proposé dans la partie commune de la norme H.263+ de prévoir des capacités de stockages d'une pluralité d'images de référence, et des moyens de calcul pour le traitement de limitation des effets de blocs. Des moyens similaires sont appliqués au décodeur.

Bien entendu, la présente invention n'est pas limitée aux exemples et modes de réalisation décrits et représentés, mais elle est susceptible de nombreuses variantes accessibles à l'homme de l'art. Ainsi, les procédés de codage, de quantification et de codage de canal décrits en 12, 14 et 16 pour la figure 1, ou inversement en 38, 36 et 32 pour la figure 2 peuvent varier. Il est clair encore que l'invention concerne non seulement l'ensemble du système de codage et du système de décodage des figures 1 et 2, mais aussi chacun d'eux considéré indépendamment de l'autre. De même, l'invention ne concerne pas seulement un procédé de transmission avec un codage et un décodage, mais aussi un procédé de codage, et un procédé de décodage, chacun considéré indépendamment de l'autre.

## Revendications

1. Un procédé de codage d'images par blocs avec prédiction du mouvement, **caractérisé par** l'utilisation de plusieurs images de référence, les images de référence ayant subi un traitement de filtrage des effets de blocs, et par la sélection d'une image de référence parmi les dites images de référence lors du codage d'une image.

2. Un système de codage d'images par blocs avec prédiction du mouvement, comprenant un estimateur de mouvement (2) recevant une image à coder et fournissant des vecteurs de mouvement, un prédicteur de compensation du mouvement (6) recevant les vecteurs de mouvement et une image de référence et fournissant une image estimée, une mémoire d'images de référence stockant au moins deux images de référence et fournissant une des dites images de référence au dit prédicteur, et un dispositif de filtrage des effets de blocs (11) filtrant les effets de blocs des images de référence avant leur stockage dans la mémoire d'images de référence.

3. Un procédé de décodage d'image avec prédiction du mouvement par blocs, **caractérisé par** la reconstitution d'une image transmise à partir d'une image de référence sélectionnée parmi plusieurs images de référence reçues, les images de référence ayant subi un traitement de filtrage des effets de blocs.

4. Le procédé de la revendication 3, **caractérisé par** l'application d'un traitement de filtrage des effets de blocs aux images reconstituées.

5. Un système de décodage d'image par prédiction du mouvement par blocs, comprenant un décodeur (32, 36, 38) fournissant des vecteurs de mouvement et une différence entre l'image à reconstituer et une image estimée, un prédicteur de compensation du mouvement (34) recevant les vecteurs de mouvement et une image de référence et fournissant une image estimée, une mémoire d'images de référence (40) stockant au moins deux images de référence et fournissant une des dites images de référence au dit prédicteur, et un dispositif de filtrage des effets de blocs (44) filtrant les effets de blocs des images de référence avant leur stockage dans la mémoire d'images de référence.

6. Le système de la revendication 5, **caractérisé par** un additionneur (42) recevant d'une part ladite différence et d'autre part ladite image estimée, et fournissant une image reconstituée au dit dispositif de filtrage des effets de blocs (44).

7. Un procédé de transmission par un codage avec prédiction du mouvement par blocs, **caractérisé par** :
- au codage, l'utilisation de plusieurs images de référence, les images de référence ayant subi un traitement de filtrage des effets de blocs, avec une sélection d'une image de référence parmi les dites images de référence lors du codage d'une image à transmettre;
- au décodage, la reconstitution de l'image transmise à partir d'une image de référence sélectionnée parmi plusieurs images de référence reçues, les images de référence ayant subi un traitement de filtrage des effets de blocs.

8. Le procédé de la revendication 7, **caractérisé en ce que** la transmission est une transmission à bas débit et haut taux d'erreur.

9. Le procédé de la revendication 7 ou 8, **caractérisé en ce qu'**il comprend l'application d'un traitement de filtrage des effets de blocs aux images reconstituées.

10. Un dispositif de transmission par un codage avec prédiction du mouvement par blocs, comprenant un système de codage selon la revendication 2 et un système de décodage selon la revendication 5 ou 6.
